Europäisches Patentamt

European Patent Office

Office européen des brevets

(19)

(11) Publication number: **0 475 510 B1**

## EUROPEAN PATENT SPECIFICATION

(45) Date of publication of patent specification: **15.02.95**

(51) Int. Cl.⁶: **A23D 9/00**, A23L 1/36, A23L 1/20, A23G 3/00, A23K 1/16, A23D 7/00

(21) Application number: **91202242.3**

(22) Date of filing: **03.09.91**

The file contains technical information submitted after the application was filed and not included in this specification

(54) **Improvements in edible fats.**

(30) Priority: **11.09.90 GB 9019811**

(43) Date of publication of application:
**18.03.92 Bulletin 92/12**

(45) Publication of the grant of the patent:
**15.02.95 Bulletin 95/07**

(84) Designated Contracting States:
**AT BE CH DE DK ES FR GB GR IT LI NL SE**

(56) References cited:
EP-A- 0 098 174         EP-A- 0 369 516
GB-A- 1 109 995         GB-A- 2 185 990
US-A- 1 154 059         US-A- 3 278 314
US-A- 4 198 439         US-A- 4 515 818

**PATENT ABSTRACTS OF JAPAN vol. 10, no. 280 (C-374)24 September 1986**

(73) Proprietor: **UNILEVER N.V.**
**Weena 455**
**NL-3013 AL Rotterdam (NL)**
(84) Designated Contracting States:
**BE CH DE DK ES FR GR IT LI NL SE AT**

(73) Proprietor: **UNILEVER PLC**

**Unilever House**
**Blackfriars**
**P.O. Box 68**
**London EC4P 4BO (GB)**
(84) Designated Contracting States:
**GB**

(72) Inventor: **Schotel, Ronald Albert, Unilever Vlaardingen Lab.**
**Olivier van Noortlaan 120**
**NL-3133 AT Vlaardingen (NL)**
Inventor: **Elliott, Peter William, Unilever Vlaardingen Lab.**
**Olivier van Noortlaan 120**
**NL-3133 AT Vlaardingen (NL)**

(74) Representative: **Elliott, Peter William et al**
**Unilever N.V.**
**Patent Division**
**P.O. Box 137**
**NL-3130 AC Vlaardingen (NL)**

## Description

The present invention relates to improvements in compositions consisting of crushed seed material and edible fats.

Seeds, beans and nuts have found a place in human nutrition for many thousands of years, as a source of fat and/or protein.

For the purposes of this specification 'seeds' include the oil-bearing seeds of cottonseed, safflower, grapes, sunflower, rapeseed, maize, mustard and linseed: 'nuts' includes the oil bearing nuts such as, peanuts, hazelnuts, coconuts, cocoa, and almonds and 'beans' include the oil-bearing beans such as soyabeans.

The known uses of seed, bean and nut materials in food-stuffs are described hereafter with particular reference to sunflower seed.

The kernels of sunflower seeds find uses in confectionery and bakery products. Known uses for sunflower kernels include blending with honey, butter and salt to make a spread, as a nut substitute in candies, cookies and muffins, for sprinkling on syrup on pancakes or waffles, blending in cake frosting, adding to meat, fish and vegetable dishes, as an ice cream topping, a fondue dip, adding to or sprinkling on salads and as a snack food. Recipies for some of the above compositions are available from one or more of the following sources: Fisher Nut Company, St Paul, MN 55114 USA; Dahlgren and Company, Crookston MN 56716 USA and Sigco Sun Products, Breckenridge MN 56520 USA. Similar uses are known for other oil seeds, beans and nuts.

More in particular US-A-4 198 439 (Research Triangle Institute) discloses a nut cheese product comprising a homogeneous blend of ground roasted nuts, dehydrated cheese material and a texture modifying agent which comprises hydrogenated fats, non-hydrogenated fats, glycerides and mixtures thereof, which product has a water activity below about 0.70. The texture modifying agent has a melting point of above about 120°F. Different fats can be used, vegetable oil is preferred e.g. peanut, sesame, soybean, Crisco, corn, coconut etc. The nuts are peanuts, almonds, cashews, soybeans, sunflower seeds and mixtures thereof. There is 10-40% of a dehydrated cheese present which can be dehydrated cheddar, a combination of dehydrated cheddar and blue cheese or a processed cheese. Depending on the type of fat used the product can vary from soft to firm.

GB-A-2 185 990 (Unilever) discloses hardstock fats for fat spreads which are substantially saturated triglycerides of which the 2-fatty acids consist substantially of C16 and higher fatty acids and the 1,3-fatty acids are randomly distributed and contain 50% or more C14 and shorter fatty acids. The spread compositions, margarine, low-fat spreads or shortening contain also a lower-melting fat fraction (vegetable oil), the amount of hardstock is preferably 15-30% by weight and a water phase. The spreads can also contain ground edible nut material as a filler.

GB-A-1 109 995 (General Foods) discloses a nutmeat containing foodstuff, which is shape retaining and formed in discrete shapes. The product is prepared by comminuting nuts, expressing and separating the oil and then adding an oil or fat having a melting point higher than that of the expressed oil. The nuts can be cashews, peacans, almonds, filberts and walnuts but peanuts are typically used. The oils of higher melting point are various hydrogenated oils, tristearin, tripalmitin, tripalmitin and their corresponding mono- and diglycerides. Additional ingredients are salt, carbohydrate sweeteners, milk solids, starches, gums etc.

US-A-1 154 059 (Rosell) discloses a modified Turkish candy known as "Halvah". This is prepared by dissolving sugar or sucrose under heating in dextrose, corn syrup or confectioners' glucose; in a separate vessel maize oil is added to ground sesame seed, peanuts, almonds and/or "cocoanut" meat and this mixture of oil and ground seed is then thoroughly mixed with the heated sugar solution, preferably in about a 1:1 weight ratio (page 1, lines 55-56). Prior to grinding the seeds they are lightly roasted. After mixing and cooling "a friable compound having a composition just solid enough to prevent crumbling when kept in the normal containers" is obtained. Maize oil is used because of its pleasing flavour and keeps for a long time before becoming noticeably rancid. The terminology employed makes is clear that the candy-like product consisting of a mixture of roughly equal weights of oil and ground oleaginous material on the one hand and sucrose and corn syrup on the other hand crumbles easily.

US-A-3 278 314 (Colby) discloses a sweetened peanut composition or spread, preferably containing a major portion of ground peanuts. The peanuts are first roasted, then cooled and the skins are separated. They are subsequently ground and 20-30% of oil is liberated. Grinding can take place to a smooth-textured product or to a larger granular "crunchy" product. The oil can be partially hydrogenated or replaced by other edible glyceridic materials. The glycerides can be prepared by various routes like interestrification random or directed and other synthetic routes. Also included are carbohydrate sweetener substances like monosaccharides, polyhydric alcohols, polysaccharides etc. This product preferably has the appearance, taste and texture of a natural or real food product such as jelly, jam and marshmallow, it is evidently a sweet, soft product.

The compositions according to the present invention, however, do not contain more ingredients than just broken seed kernels or beans and fat such as e.g. sugar or another carbohydrate sweetening agent, liquid vegetable oils, a water phase, dry cheese etc.

Some nuts of high oil content are known have rather more specialised uses. For example is known to prepare 'peanut butter' by crushing peanuts and mixing the pulped material thus obtained with one or more fats and oils. Peanut butter compositions are described in EP 0381259. Similar 'Hazelnut Butter' is a known traditional in several European countries.

Oils and fats may be conveniently described by reference to the fatty acid composition of their constituent triacyl glycerides, both as regards the length of the carbon-chain in the consituent residues of fatty acids and the positional isomerism of these residues on the glycerol backbone. For the type of fatty acid residues it is convenient to use the notation given below in **TABLE 1,** as used throughout this specification;

TABLE 1

| S | stearic acid, | (18-carbon) |
|---|---|---|
| P | palmitic acid | (16-carbon) |
| M | lauric fats | (12-14 carbon) |
| H | stearic + palmitic | (16-18 carbon) |
| O | oleic acid | (18 carbon mono-unsat.) |
| L | linoleic acid | (18 carbon di-unsat.) |
| E | mono-trans fat | (16-18 carbon mono-unsat) |
| U | oleic + linoleic | (18 carbon unsaturated) |

A plurality of patents describe the manufacture of fats comprising particular levels of specified tri-acyl glycerides.

For example, US 4267643 discloses some of the S2E and SES ratios which can be obtained by non-fractionated but hydrogenated vegetable oils: JP 54/034305 and JP 52/069411 disclose specific S2U, SU2, S3 and U3 ratios obtained by mixing of co-randomised vegetable fats: the effect of S2O triglycerides on the physical properties of a fat is discussed in EP 78568 and US 4447462 whereas the effect of S2U triglycerides on physical properties is discussed in EP 109721.

Certain other triglycerides are only present at low levels in naturally occurring oilseeds. The so-called H2M triglycerides, which comprise two fatty acid chains of 16-18 carbon atoms and one fatty acid chain of 12-14 carbon atoms are found at levels of 1.5% in coconut fat, 1.2% in palm oil, 1.0% in palm kernel fat. Non-vegetable and indirect sources of these triglycerides comprise butterfat which contains around 6.0% of H2M and edible tallow which comprises around 8.5%: coconut fat hardened to a slip m.p. of around 34°C (8.8%), hardened and interesterified coconut fats (above 10%), hardened palm kernel fats (12.8%) and interesterified and fractionated blends of hardened palm and palm kernel fats (above 36%).

Edible seeds and beans are known to exhibit characteristic positional distributions as regards the location of the fatty acid residues on the glycerol "backbone" of their trigly-cerides. **TABLE 2**, given below, illustrates this positional isomerism by reference to the percentages by weight of fatty acid residues overall and at the 2-position on the glycerol "backbone" of the tri-glyceride.

TABLE 2

| Component Fatty Acids Of Oilseeds Type and Positional Isomerism | | | | | | | | | | | | | | |
|---|---|---|---|---|---|---|---|---|---|---|---|---|---|---|
| | all | 2' | all | 2' | all | 2' | all | 2' | all | 2' | all | 2' | all | 2' |
| | Sunflower | | Safflower | | Soybean | | Cotton-seed | | Grapeseed | | Maize | | European Rapeseed | |
| **Saturates** | | | | | | | | | | | | | | |
| C 6 | 0 | 0 | 0 | 0 | 0 | 0 | 0 | 0 | 0 | 0 | 0 | 0 | 0 | 0 |
| C 8 | 0 | 0 | 0 | 0 | 0 | 0 | 0 | 0 | 0 | 0 | 0 | 0 | 0 | 0 |
| C 10 | 0 | 0 | 0 | 0 | 0 | 0 | 0 | 0 | 0 | 0 | 0 | 0 | 0 | 0 |
| C 12 | 0 | 0 | 0 | 0 | 0 | 0 | 0.5 | 0.5 | 0 | 0 | 0 | 0 | 0 | 0 |
| C 14 | 0.5 | 0.5 | 0 | 0 | 0 | 0 | 0.5 | 0.5 | 0. | 0 | 0.5 | 0.5 | 0 | 0 |
| C 16 | 7 | 1 | 7 | 3 | 11 | 1.5 | 24 | 2.5 | 7.5 | 1 | 13 | 2 | 3 | 1 |
| C 18 | 4 | 0.5 | 3 | 1 | 3.5 | 0.5 | 2.5 | 0.5 | 3.5 | 0.5 | 2.5 | 0.5 | 1 | 0 |
| C 20 | 0.5 | 0 | 0 | 0 | 0 | 0 | 0.5 | 0 | 0 | 0 | 0 | 0 | 0.5 | 0.5 |
| C 22 | 0 | 0 | 0 | 0 | 0 | 0 | 0 | 0 | 0 | 0 | 0 | 0 | 0.5 | 0 |
| C 24 | 0 | 0 | 0 | 0 | 0 | 0 | 0 | 0 | 0 | 0 | 0 | 0 | 0 | 0 |
| **Monos** | | | | | | | | | | | | | | |
| C 16 | 0 | 0 | 0 | 0 | 0 | 0 | 1 | 1 | 0.5 | 1 | 0 | 0 | 0.5 | 1 |
| C 18 | 24 | 24 | 13 | 25 | 23.5 | 25 | 18 | 31.5 | 15.5 | 19 | 30.5 | 34.5 | 13 | 34 |
| C 20 | 0 | 0 | 0 | 0 | 1 | 0 | 0 | 0 | 0 | 0 | 0.5 | 0.5 | 9.5 | 0.5 |
| C 22 | 0 | 0 | 0 | 0 | 0 | 0 | 0 | 0 | 0 | 0 | 0 | 0 | 48 | 1 |
| **Diunsats** | | | | | | | | | | | | | | |
| C 18 | 63.5 | 73 | 77 | 71 | 53 | 67 | 53 | 63 | 73 | 77.5 | 51.5 | 61.5 | 13.5 | 40 |
| C 20 | 0 | 0 | 0 | 0 | 0 | 0 | 0 | 0 | 0 | 0 | 0 | 0 | 0.5 | 0 |
| C 22 | 0 | 0 | 0 | 0 | 0 | 0 | 0 | 0 | 0 | 0 | 0 | 0 | 0.5 | 0 |
| **Triunsats** | | | | | | | | | | | | | | |
| C 18 | 0.5 | 1 | 0 | 0 | 7.5 | 6 | 0 | 0 | 0.5 | 1 | 1 | 0.5 | 9.5 | 22 |

From **TABLE 2** it can be seen that the both the seeds (sunflower, safflower, cottonseed, grapeseed, maize and (European) rapeseed) and the soybeans exhibit specific preferences for certain fatty acids at certain positions.

According to one embodiment of the present invention there is provided a composition of matter comprising broken seed kernels or beans and one or more edible fats wherein the total fat present comprises 10 - 90% wt of fat with 12-16 carbon saturated fatty acids at the 2-position.

Preferably the total fat present comprises up to 50%wt of fat with 12-16 carbon saturated fatty acids at the 2-position. In the more preferred embodiments of the invention up to 30%wt of the fatty acid residues at the 2-position comprise fatty acids with a chain length of 12-16 carbon atoms.

As stated above, known edible fats obtained from known seeds do not comprise such levels of triglycerides with 12-16 carbon fatty acids at the 2-position. Such tri-glycerides are found in the oil palms and can be obtained from nuts like the coconut. Crushed nuts are excluded from the scope of the present invention: which is limited to compositions comprising at least one fat which has been modified by chemical methods or or obtained through genetic modification of the source plant so as to increase the 12-16 carbon fatty acid content at the 2-position of the constituent trigly-cerides.

In one embodiment of the present invention the total fat present includes a triglycerides of the so-called H2M type, at a level of 15-50%wt of the fat phase.

In a further embodiment of the present invention the total fat present includes a triglyceride of the so-called SSS type at a level of 15-50%wt of the fat phase.

Both the H2M and the SSS triglycerides are known components of known margarine hardstocks and it is envisaged that genetic modification techniques can be employed to manipulate the content of these triglycerides in the oilseed per se.

In such compositions of seed material and H2M the content of 12-16 carbon fatty acids at the 2-position is most preferably at least 5% on fat phase. Other fats having a relatively high melting point as compared to the liquid seed oils can replace the H2M and SSS fats. Such fats are can be obtained by modification of the triglycerides present in, for example, the fat and soybeans of EP 369519.

4

In a particularly preferred embodiment of the present invention, the composition comprises 10-30% by weight of a fat comprising at least 10%wt of 12 or 14 carbon saturated fatty acids and 90-70%wt (i.e. the balance up to 100%) crushed seed or bean material. Such compositions can be obtained by simple mixing of crushed seed material with a suitable fat or by crushing of seeds containing a suitable fat.

Suitable broken seed kernels are obtained from one or more of a plant selected from sunflower, rape, saf-flower, mustard, flax, cotton, maize, and grape.

Suitable beans include soybeans. Sunflower and rape seeds as well as soybeans are particularly preferred.

It is advisable for dietary and nutritional reasons that the level of trans fatty acids in the products according to the present invention should be as low as possible. Low levels of trans fatty acids can be ensured by ensuring that hydrogenation under trans-promoting conditions is avoided. This can be ensured by an appropriate choice of catalyst or the use of natural fatty materials. Trans-fatty acids are rarely found in natural fats.

In order that the present invention may be further understood it will be described hereafter by way of an example embodying the invention and relating to one method for preparation of materials for use in the manufacture of confectionery. While the invention is described with reference to a particular use it is not our intention to limit the scope of the invention to this use as other applications of the invention are envisaged: including the use of the products claimed as animal feeds or as a base for the manufacture of edible spreads and other fatty products.

EXAMPLE

One kilogram of sunflower kernels were placed in a "Moulinex (RTM) food-processor and ground for 10-15 seconds. The grounds comprised fragments of kernel ranging in size from 3mm to less than 0.5mm (large dimension). In repeated experiments the grounds were either mixed with 150g of a fat (experiments A and B) as described below or pressed into blocks without the addition of fats (experiment C). The quality of the resulting blocks was assessed by placing a single block in a paper cup (of the type used in a coffee dispensing machine) and shaking the cup by hand. This simple method was found to be sufficient to demonstrate the difference between the stability of the blocks obtained in the three types of experiment.

The fat used in experiment (A) comprised a wet-fractionated, mid-fraction, of an inter-esterified blend of hardened palm fat and hardened palm kernel fat. This fat comprises a H2M type fat. The paste-like material obtained from the grounds and this fat could be pressed into block-like shapes which retained their form when agitated, and which were suitable for use as the filling of a confection or as a confectionery ingredient.

The fat used in experiment (B) was a commercially available sunflower oil. Blocks were difficult to form from the grounds and this material and fell apart when the cup was shaken lightly.

In the control experiment (C) no fat was added. No blocks could be formed from the grounds which were chalky and powdery in the absence of added fat.

The overall fat content of the blocks formed in experiment (A) was determined by extraction of the fat present with ether and subsequent analysis of the fats present in the extract. The result of analysis of total fatty acid content and 2-position fatty acid content is given in **TABLE 3** below. All results are given in wt%.

TABLE 3:

| Acid | total | 2-position |
|---|---|---|
| Saturates | | |
| C-8 | 0.2% | − |
| C-10 | 0.4% | 0.1% |
| C-12 | 8.0% | 7.1% |
| C-14 | 2.9% | 3.0% |
| C-16 | 12.0% | 9.0% |
| C-18 | 15.3% | 12.8% |
| C-20 | 0.3% | 0.1% |
| C-22 | 0.5% | 0.1% |
| Mono-unsaturates | | |
| C-18 | 12.2% | 11.2% |
| Di-unsaturates | | |
| C-18 | 48.0% | 56.4% |

It can be seen that the total content of 8-22 carbon fatty acid residues at the 2-position is around 31%wt and that almost 20%wt of the saturated fatty acids at the 2-position are 12 to 16 carbon saturated fatty acids.

## Claims

1. Composition of matter consisting of broken seed kernels or beans and one or more edible fats, wherein the total fat present comprises 10-90%wt of triglyceride fat with 12-16 carbon saturated fatty acids at the 2-position.

2. Composition according to claim 1 wherein the total composition contains 10-30%wt of a fat comprising at least 10%wt of 12 and 14 carbon saturated fatty acids.

3. Composition according to claim 1 or 2 wherein the total fat present comprises up to 50%wt of fat with 12-16 carbon saturated fatty acids at the 2-position.

4. Composition according to claim 1, 2 or 3 wherein up to 30%wt of the fatty acid residues at the 2-position are saturated fatty acids with a chain length of 12-16 carbon atoms.

5. Composition according to any of the claims 1-4 wherein the fat phase comprises an SSS type triglyceride at a level of 15-50%wt of the fat phase.

6. Composition according to any of the claims 1-5 comprising 90-70%wt crushed seed or bean material.

7. Composition according to any of the claims 1-6 wherein the broken seed kernels are obtained from one or more plants selected from sunflower, rape, safflower, mustard, flax, cotton, maize and grape.

8. Composition according to any of the claims 1-7 wherein the broken beans are broken soybeans.

## Patentansprüche

1. Zusammensetzung von Stoffen, die aus zerstoßenen Samenkernen oder Bohnen sowie einem oder mehreren eßbaren Fetten bestehen, worin das gesamte vorliegende Fett 10 bis 90 Masse-% Triglycerid-Fett mit gesättigten $C_{12}$-$C_{16}$-Fettsäuren in Stellung 2 umfaßt.

**2.** Zusammensetzung nach Anspruch 1 wobei die gesamte Zusammensetzung 10 bis 30 Masse-% eines Fetts, das zumindest 10 Masse-% gesättigte $C_{12}$-$C_{14}$-Fettsäuren umfaßt, enthält.

**3.** Zusammensetzung nach Anspruch 1 oder 2, worin das gesamte vorliegende Fett bis zu 50 Masse-% Fett mit gesättigten $C_{12}$-$C_{16}$-Fettsäuren in Stellung 2 umfaßt.

**4.** Zusammensetzung nach Anspruch 1, 2 oder 3, worin bis zu 30 Masse-% der Fettsäurereste in Stellung 2 gesättigte Fettsäuren mit einer Kettenlänge von 12 bis 16 Kohlenstoffatomen sind.

**5.** Zusammensetzung nach einem der Ansprüche 1 bis 4, worin die Fettphase ein SSS-Typ-Triglycerid in einer Konzentration von 15 bis 50 Masse-% der Fettphase umfaßt.

**6.** Zusammensetzung nach einem der Ansprüche 1 bis 5, welche 90 bis 70 Masse-% zerstoßenes Samen- oder Bohnenmaterial umfaßt.

**7.** Zusammensetzung nach einem der Ansprüche 1 bis 6, worin die zerstoßenen Samenkerne von einer oder mehreren Pflanzen, ausgewählt aus Sonnenblumen, Raps, Saflor, Senf, Flachs, Baumwolle, Mais und Weintrauben, erhalten werden.

**8.** Zusammensetzung nach einem der Ansprüche 1 bis 7, worin die zerstoßenen Bohnen zerstoßene Sojabohnen sind.

**Revendications**

**1.** Composition de matière constituée d'amandes de graines ou de fèves broyées et d'une ou plusieurs graisses comestibles dans lesquelles la teneur totale en graisse comprend 10-90% en poids de graisse de triglycéride avec des acides gras saturés ayant 12-16 atomes de carbone en position 2.

**2.** Composition selon la revendication 1, dans laquelle la composition globale contient 10-30% en poids d'une graisse comprenant au moins 10% en poids d'acides gras saturés ayant 12 et 14 atomes de carbone.

**3.** Composition selon la revendication 1 ou 2, dans laquelle le total de la graisse présente comprend jusqu'à 50% en poids de graisse ayant des acides gras saturés ayant 12-16 atomes de carbone en position 2.

**4.** Composition selon la revendication 1, 2 ou 3, dans laquelle jusqu'à 30% en poids des restes acides gras en position 2 sont des acides gras saturés ayant une longueur de chaîne de 12-16 atomes de carbone.

**5.** Composition selon l'une quelconque des revendications 1-4, dans laquelle la phase grasse comprend un triglycéride du type SSS à une teneur de 15-50% de la phase aqueuse.

**6.** Composition selon l'une quelconque des revendications 1-5 comprenant 90-70% en poids de matériau de graines ou de fèves broyé.

**7.** Composition selon l'une quelconque des revendications 1-6, dans laquelle lesdites amandes broyées sont obtenues à partir d'une ou plusieurs plantes choisies parmi le tournesol, le colza, le carthame, la moutarde, le lin, le coton, le mais et le raisin.

**8.** Composition selon l'une quelconque des revendications 1-7 dans laquelle les fèves broyées sont des fèves de soja broyées.